# NEUE EUROPÄISCHE PATENTSCHRIFT

(11) **EP 0 843 281 B2**
(45) Veröffentlichungstag und Bekanntmachung des Hinweises auf die Entscheidung über den Einspruch: **11.03.2015**
(45) Hinweis auf die Patenterteilung: 19.04.2006
(21) Anmeldenummer: 97119325.5
(22) Anmeldetag: 05.11.1997
(51) Int. Cl.: G06K 19/14

(54) **Vorrichtung zur Herstellung von Oberflächenstrukturen**
Device for producing surface structures
Dispositif pour la réalisation de structures de surfaces

(30) Priorität: 14.11.1996 DE 19647154
(43) Veröffentlichungstag der Anmeldung: 20.05.1998
(60) Teilanmeldung: 05019761.5
(73) Patentinhaber: Giesecke & Devrient GmbH, 81677 München (DE)
(72) Erfinder: Welling, Ando, Dr., 84424 Isen (DE)
(74) Vertreter: Klunker . Schmitt-Nilson . Hirsch

(56) Entgegenhaltungen:
- EP-A2- 0 219 012
- WO-A2-96/15912
- DE-A- 2 307 482
- DE-A- 4 441 198

## Beschreibung

Die Erfindung betrifft eine Vorrichtung zur Herstellung einer Oberflächenstruktur gemäß dem Oberbegriff von Anspruch 1.

Datenträger, wie z. B. Ausweiskarten, Bank- oder Kreditkarten werden in den verschiedensten Bereichen des täglichen Lebens eingesetzt. Beispielsweise dienen sie der Identifizierung des Inhabers oder der Durchführung bargeldloser Transaktionen. Es ist deshalb von größter Bedeutung, derartige Datenträger mit besonderen Sicherheitsmerkmalen zu versehen, so daß eine Fälschung derartiger Datenträger in größtmöglichem Maße erschwert und eine Verfälschung einfach erkannt wird.

Im Zusammenhang mit optischen Speichersystemen beschreibt die DE 2 307 482 A1 die Erzeugung eines zusätzlichen Beugungsgitters auf einem optischen Datenspeicher mit Hilfe eines Prägestempels. Durch Überlagerung dieses Beugungsgitters mit einem bereits vorhandenen Beugungsgitter unter einem Beugungswinkel und/ oder einem Drehwinkel können zusätzliche Informationen in den Datenspeicher eingeschrieben werden.

Aus der EP 0 219 012 A1 ist beispielsweise ein mehrschichtiger Datenträger mit einer transparenten Deckfolie bekannt, in welche ein Oberflächenrelief in Form einer Linsenstruktur, bevorzugt ein Zylinderlinsenraster, eingebracht ist. Durch dieses Linsenraster hindurch werden mittels eines Lasers Informationen in darunterliegende Volumenbereiche des Datenträgers eingebracht, die als geschwärzte Bereiche visuell gut zu erkennen sind. Aufgrund der Focuswirkung der Linsen werden nur schmal begrenzte Bereiche des Datenträgers geschwärzt, so daß die Informationen lediglich unter dem Betrachtungswinkel beobachtet werden können, der dem Einfallswinkel des Lasers auf die Linsenstruktur entspricht. Auf diese Weise können bei Verwendung verschiedener Beschriftungswinkel mehrere nur unter bestimmten Betrachtungswinkeln erkennbare Informationen eingeschrieben werden. Dieser Effekt wird im folgenden als "Kippbild" bezeichnet.

Dieses Kippbild besitzt eine Reihe von sicherheitstechnisch relevanten Vorteilen. So ist es beispielsweise weder mit fotografischen noch mit kopiertechnischen Mitteln reproduzierbar, da unter einem Aufnahmewinkel nie gleichzeitig alle Kippbild-Informationen vorliegen. Der gefälschte Datenträger zeigt somit lediglich eine der Informationen und diese unter allen Betrachtungswinkeln. Der Kippbildeffekt ist verschwunden. Zudem bietet die Laserbeschriftung einen zusätzlichen Fälschungsschutz. Denn bei der Laserbeschriftung werden im Inneren des Datenträgermaterials sichtbare Veränderungen hervorgerufen, die weder chemisch noch mechanisch ohne vollständige Zerstörung des Datenträgers entfernt oder geändert werden können.

Dieses Sicherheitsmerkmal bietet auch bezüglich der wirtschaftlichen Herstellung von Datenträgern einige Vorteile. Denn die Beschriftung des Linsenrasterbereichs erfolgt erst nach der Fertigstellung des Datenträgers, so daß hierbei eventuell anfallender Ausschuß nicht beschriftet und daher komplizierte Abläufe für ein nachträgliches Herstellen eines neuen Datenträgers mit dem gleichen Datensatz vermieden werden. Dies gilt insbesondere für den Fäll, daß die Kippbildinformation benutzerbezogen ausgeführt ist.

Die Herstellung der Linsenstruktur erfolgte bisher entweder während der Herstellung des Datenträgers oder nach seiner Fertigstellung durch Einprägen mit einem Prägestempel. Durch die Erhitzung des Datenträgermaterials und den hierauf ausgeübten Druck kommt es allerdings leicht zu irreparablen Verzügen und zu störenden Durchprägungen auf die Datenträgerrückseite, die häufig als Druckfläche benutzt wird.

Um diesen Nachteil zu beseitigen, wurde in der DE 44 41198 A1 (gegen die die Ansprüche abgegienzt sind) und in der WO 96/15912 bereits vorgeschlagen, Verzüge des Datenträgers durch stufenweises Steuern von Temperatur und Druck zu vermeiden. Hierfür ist jedoch eine entsprechende Steuerung des Stempels notwendig, was zu erheblichen Verlängerungen der Taktzeiten führt. Dieser Nachteil kann durch parallel arbeitende Mehrfachstempelsysteme abgefangen werden. Allerdings sind derartige Systeme aufwendig hinsichtlich der benötigten mehrfachen Mechanik und des Platzbedarfes.

Der vorliegenden Erfindung liegt daher die Aufgabe zugrunde, eine einfachere Vorrichtung zur Herstellung von Datenträgern mit einer Oberflächenstruktur vorzuschlagen, die aber dennoch Verzüge des Datenträgers vermeidet.

Diese Aufgabe wird durch die in den unabhängigen Ansprüchen definierten Merkmale gelöst. Vorteilhafte Weiterbildung und Ausführungsformen ergeben sich aus den abhängigen Ansprüchen.

Die Erfindung beruht auf dem Grundgedanken, durch entsprechendes Ausbilden des Randbereiches von Prägewerkzeugen die Auswirkungen des Prägevorgangs für einen Datenträger auf die Ausbildung einer Prägestruktur zu begrenzen und sekundäre Effekte zu minimieren bzw. zu eliminieren.

Dies hat den Vorteil kurzer Taktzeiten, bei gleichzeitiger Vermeidung von Verzügen auf der Rückseite und von Verwölbungen im Übergangsbereich zwischen Oberflächenstruktur und Karte, so daß ein kontinuierlicher Übergang entsteht.

In einer bevorzugten Ausführungsform liegt die Oberflächenstruktur innerhalb der Kartenoberfläche und der Prägestempel ist rundumlaufend abgeschrägt, wobei der Winkel der Abschrägung vorzugsweise 10 bis 30 Grad beträgt.

Alternativ kann auch das Gegenlager rundumlaufend abgeschrägt sein.

Weitere Vorteile und vorteilhafte Ausgestaltung der vorliegenden Erfindung ergeben sich aus der nachfolgenden Beschreibung bevorzugter Ausführungsbeispiele anhand der Figuren.

Es zeigen:
- Fig. 1: eine Aufsicht eines Datenträgers,
- Fig. 2: eine Schnittansicht entlang Linie A-B von Fig. 1 einer Vorrichtung mit Prägestempel und Gegenlager,
- Fig. 3: eine Schnittansicht einer bevorzugten Ausführungsform eines erfindungsgemäßen Prägestempels,
- Fig. 4: eine Schnittansicht eines Prägestempels mit Ultraschall-Sonotrode und
- Fig. 5: einen Datenträger während eines erfindungsgemäßen lokalen Rückbiegeschrittes.

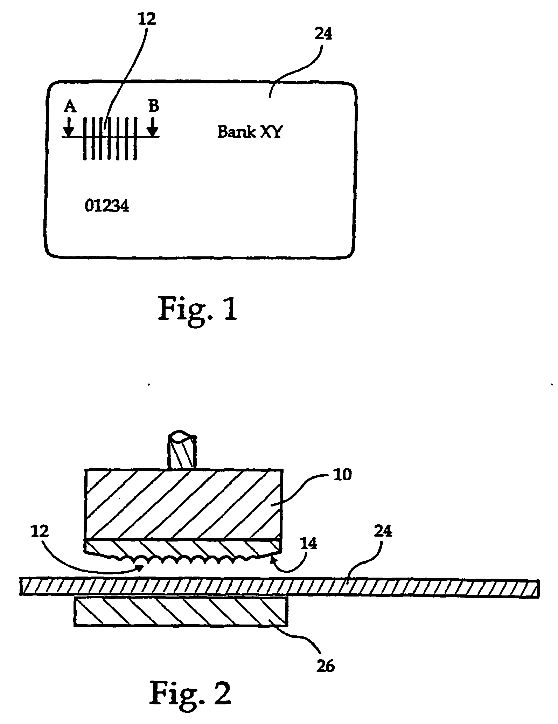

Fig.1 zeigt einen Datenträger 24 mit einer Linsenstruktur 12 und verschiedenen weiteren aufgebrachten Informationen.

Fig. 2 zeigt als Schnittansicht entlang der Linie A-B von Fig. 1 eine Vorrichtung zum Herstellen einer Prägestruktur auf einem Datenträger 24. Die Vorrichtung umfaßt einen Prägestempel 10 mit einzuprägender Unsenstruktur 12 und ein Gegenlager 26. Der Stempel 10 wird von oben auf den Datenträger 24 aufgepreßt und ggf. geheizt, so daß sich das Negativrelief 12 in dem Datenträger 24 abdrückt. Der Stempel 10 ist in einem rundumlaufenden Randbereich 14 abgeschrägt.

Beim Aufsetzen dieses Prägestempels 10 auf eine zu behandelnde Oberfläche des Datenträgers 24 wird durch die Abschrägung 14 das Material besser verteilt, so daß es zu keiner Wulstbildung am umlaufenden Rand des Prägestempels auf der Datenträgeroberfläche kommt und entsprechende Verformungen bzw. Verwölbungen des Datenträgers vermieden werden. Die Abschrägung 14 verläuft um den gesamten umlaufenden Rand des Prägestempels 10 und bildet so eine umlaufende Phase 14. Dies gewährleistet eine gleichmäßige Verteilung des verdrängten Materials an der Oberfläche des behandelten Datenträgers.

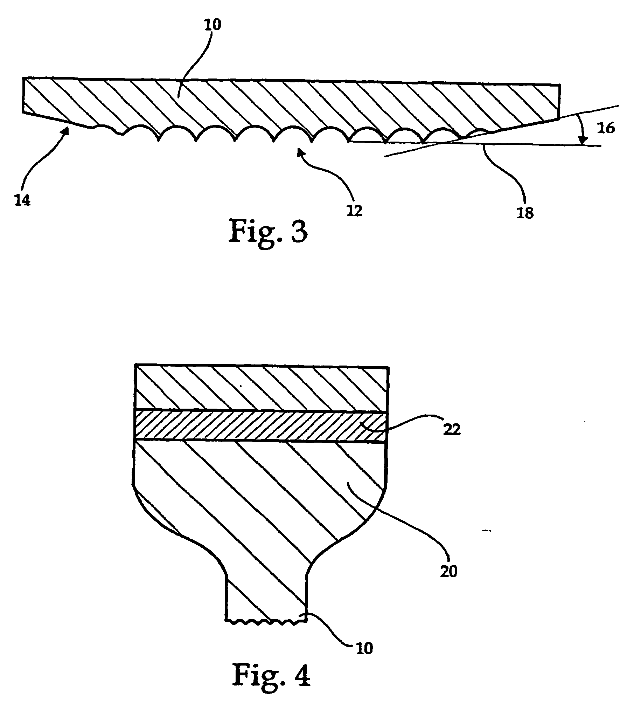

Fig. 3 zeigt in einer vergrößerten Schnittansicht den unteren Teil des Prägestempels 10 von Fig.1, der mit einer Linsenstruktur 12 auf seiner Oberfläche versehen ist. Diese Oberfläche ist mit einer gedachten Linie 18 angedeutet.

Im Randbereich ist der erfindungsgemäße Prägestempel 10 mit einer Abschrägung 14 ausgebildet. Diese Abschrägung schließt mit der Linie 18 der gedachten Oberfläche den Winkel 16 ein.

Diese Abschrägung reduziert den Druck auf den Datenträger 24 im Randbereich des Prägestempels 10. Dadurch werden Verwölbungen, insbesondere auf der Rückseite des Datenträgers 24, bereits beim Prägevorgang vermieden. Unmittelbar nach dem Prägevorgang kann ein praktisch unverbogener bzw. unverwölbter Datenträger 24 ohne weitere notwendige Behandlungsschritte bezüglich der Verwölbung entnommen werden. -

Hierbei sind insbesondere Prägekräfte in der Größenordnung von 10 KN/cm² vorteilhaft.

Fig. 4 zeigt eine weitere erfindungsgemäße Ausführungsform eines Prägestempels 10. Dieser ist zusätzlich mit einer Sonotrode 20 ausgerüstet, die an einem Piezokristall 22 befestigt ist. Die Sonotrode 20 wirkt als Übersetzung, insbesondere des Drucks, vom Piezokristall 22 auf den Prägestempel 10. Das Einprägen einer Linsenstruktur in einen Datenträger benutzt dabei grundsätzlich zwei Effekte:
1. Es entsteht an einem Berührungspunkt zwischen Datenträgeroberfläche und Spitzen des Stempels 10 eine Mikroreibung, die zu einer entsprechenden Erwärmung des Kunststoffes führt.
2. Es wird die Struktur des Stempels 10 durch die oszillierende Bewegung des Prägestempels 10 an der Sonotrode 20 aufgrund des von dem Piezokristall 22 erzeugten Ultraschalls sozusagen eingetrieben. Dies erzeugt zusätzlich hohe Druckspitzen an den Berührungspunkten zwischen Datenträger und Prägestempel 10.

Beim Heißprägen ohne Ultraschall wird häufig folgender Effekt beobachtet:

Die durch den Stempel ausgebildeten Wülste der Linsen federn beim Abnehmen des Stempels von der Oberfläche zurück. Dies führt zu einer Reduzierung der Genauigkeit der ausgebildeten Linsengeometrie und entsprechend zu optischen Verzerrungen bei Betrachtung eines Kippbildes durch diese Linsenstruktur. Durch hohe Frequenzen mit geringem Hub des oszillierenden Prägestempels 10 kann mit der Ultraschalltechnik dieses Zurückfedern vermindert bzw. beseitigt werden, so daß die ausgebildeten Linsenstrukturen eine sehr genaue, gewünschte Geometrie aufweisen.

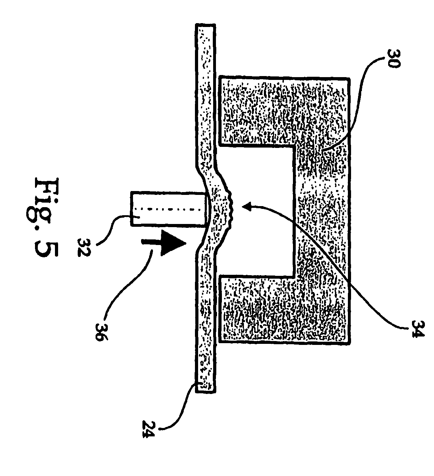

Wie in Fig. 5 dargestellt, ist es vorgesehen, nach dem Prägevorgang einen Rückbiegeschritt nur lokal in einem Bereich des Datenträgers 24 auszuführen, in dem zuvor ein Prägeschritt erfolgte. Hierbei liegt der Datenträger 24 an einem Anschlag 30 an und ein Biegestempel 32 drückt in Pfeilrichtung 36 auf den Datenträger 24 in einem lokalen, vorbestimmten Bereich, in dem zuvor eine Linsenstruktur 34 aufgeprägt wurde.

Selbstverständlich sind bezüglich der Ausbildung von Anschlag 30 und Biegestempel 32 auch andere geeignete Konfigurationen als die in Fig. 5 beispielhaft dargestellten möglich.

Der Rückbiegeschritt wird bevorzugt während der Abkühlphase des Datenträgers 24 nach einem Prägeschritt ausgeführt.

Zur nachträglichen Beseitigung einer lokalen Verwölbung wird ferner vorgeschlagen, den verwölbten Bereich 34 gleichmäßig zu erwärmen und wieder abkühlen zu lassen. Durch Erwärmen des Materials, z. B. über Infrarotlicht, bis zur Plastizitätsgrenze wird eine Tendenz des Materials des Datenträgers 24 erzeugt, bei der sich dieses Material ausdehnen möchte. Da der Umgebungsbereich des verwölbten Bereichs 34 jedoch nicht erwärmt wird, ist eine Ausdehnung nur in Form einer dicken Änderung möglich. Beim Abkühlen zieht sich das Material gleichmäßig zusammen und glättet dabei lokale Verwölbungen.

In besonders bevorzugter Weise, werden die eben geschilderten Temperaturbehandlungsschritte mit den zuvor in Zusammenhang mit Fig. 5 beschriebenem Rückbiegeschritt kombiniert, so daß eine optimale Verminderung bzw. Entfernungen von Verwölbungen auf dem Datenträger 24 erreicht wird.

## Patentansprüche

1. Vorrichtung zur Herstellung einer Oberflächenstruktur in Form einer Linsenstruktur (12) auf einem Datenträger mit einem Prägestempel (10) und einem Gegenlager (26), **dadurch gekennzeichnet, daß** der Prägestempel (10) und/oder das Gegenlager (26) ein gesauten rendumlaufenden Randbereich (14) abgeschrägt ist.

2. Vorrichtung nach Anspruch 1, **dadurch gekennzeichnet, daß** der abgeschrägte Randbereich (14) derart verläuft, daß sich die Dicke des Prägestempels (10) und/oder des Gegenlagers (26) nach außen bin verjüngt.

3. Vorrichtung nach wenigstens einem der Ansprüche 1 bis 2, **dadurch gekennzeichnet, daß** der Prägestempel (10) und/oder das Gegenlager (26) mit einer Schutzschicht bedeckt, insbesondere verchromt, sind.

4. Vorrichtung nach wenigstens einem der Ansprüche 1 bis 3, **dadurch gekennzeichnet, daß** der Prägestempel (10) eine mit einer Ultraschallquelle (22) verbundene Sonotrode (20) aufweist.

5. Vorrichtung nach Anspruch 4, **dadurch gekennzeichnet, daß** die Ultraschallquelle ein Piezokristall (22) ist.

6. Datenträger mit einer in wenigstens einem vorbestimmten Bereich seiner Oberfläche ausgebildeten Oberflächenstruktur (12), **dadurch gekennzeichnet, daß** die Oberflächenstruktur (12) im gesauten rundumlaufenden. Randbereich einen abgeschrägten Abschnitt aufweist, welcher die Oberfläche ohne Oberflächenstruktur mit der Oberfläche mit der Oberflächenstruktur stetig verbindet.

7. Datenträger nach Anspruch 6, **dadurch gekennzeichnet, daß** die Oberflächenstruktur (12) eine Prägestruktur, insbesondere eine Linsenstruktur, insbesondere eine Zylinder-Linsen-und/oder Kugellinsenstrukt ist

8. Datenträger nach Anspruch 6 oder 7, **dadurch gekennzeichnet, dass** der abgeschrägte Abschnitt einen Winkel von 1 bis 30°, insbesondere 10°, bezüglich der umgebenden Oberfläche des Datenträges (24) aufweist.

9. Verfahren zur Herstellung einer Oberflächenstruktur in Form einer Linsenstruktur (12) auf einem Datenträger, wobei die Oberflächenstruktur in einem Prägeschritt mit einem Prägestempel (10) und einem Gegenlager (26) eingeprägt wird, **dadurch gekennzeichnet, daß** der Prägestempel (10) und/oder das Gegenlager (26) im gesauten rundumlaufenden Randbereich (14) abgeschrägt ist.

## Claims

1. An apparatus for producing a surface structure in the form of a lens structure (12) on a data carrier with an embossing die (10) and a support (26), **characterized in that** the embossing die (10) and/or the support (26) is beveled in the total all-around edge area (14).

2. The apparatus according to claim 1, **characterized in that** the beveled edge area (14) extends in such a way that the thickness of the embossing die (10) and/or of the support (26) tapers outwardly.

3. The apparatus according to at least one of claims 1 to 2, **characterized in that** the embossing die (10) and/or the support (26) are covered with a protective layer, in particular chromium-plated.

4. The apparatus according to at least one of claims 1 to 3, **characterized in that** the embossing die (10) has a sonotrode (20) connected to an ultrasound source (22).

5. The apparatus according to claim 4, **characterized in that** the ultrasound source is a piezoelectric crystal (22).

6. A data carrier having a surface structure (12) formed in at least a predetermined area of the surface thereof, **characterized in that** the surface structure (12) has in the total all-around edge area a beveled portion which continuously connects the surface without the surface structure to the surface with the surface structure.

7. The data carrier according to claim 6, **characterized in that** the surface structure (12) is an embossed structure, in particular a lens structure, in particular a cylinder lens structure and/or spherical lens structure.

8. The data carrier according to claim 6 or 7, **characterized in that** the beveled portion has an angle of 1 to 30°, in particular 10°, with respect to the surrounding surface of the data carrier (24).

9. A method for producing a surface structure in the form of a lens structure (12) on a data carrier, the surface structure being embossed with an embossing die (10) and a support (26) in an embossing step, **characterized in that** the embossing die (10) and/or the support (26) is beveled in the total all-around edge area (14).

## Revendications

1. Dispositif pour fabriquer une structure de surface sous la forme d'une structure (12) de lentille sur un support de données, le dispositif comprenant un outil à estamper (10) et un contre-appui (26), l'outil (10) à estamper et/ou le contre-appui (26) étant chanfreiné(s) ou biseauté(s) sur une zone de bordure (14) prédéterminée, **caractérisé en ce que** le chanfrein ou le biseau s'étend sur la totalité de la zone de bordure périphérique.

2. Dispositif selon la revendication 1, **caractérisé en ce que** la zone de bordure chanfreinée (14) est réalisée de sorte que l'épaisseur de l'outil à estamper (10) et/ou du contre-appui (26) s'effile vers l'extérieur.

3. Dispositif selon au moins l'une des revendications 1 à 2, **caractérisé en ce que** l'outil (10) à estamper et/ou le contre-appui (26) est (sont) recouvert(s) d'une couche de protection, en particulier est (sont) chromé(s).

4. Dispositif selon au moins l'une des revendications 1 à 3, **caractérisé en ce que** l'outil à estamper (10) comporte une électrode à ultrasons ou Sonotrode (20) reliée à une source d'ultrasons (22).

5. Dispositif selon la revendication 4, **caractérisé en ce que** la source d'ultrasons est un cristal piézoélectrique (22).

6. Support de données présentant une structure de surface (12) réalisée sur au moins une zone prédéterminée de sa surface, la structure de surface (12) comportant sur une zone de bordure périphérique prédéterminée un tronçon chanfreiné ou biseauté qui relie de façon permanente la surface qui ne présente pas la structure de surface à la surface qui présente la structure de surface, **caractérisé en ce que** le tronçon chanfreiné ou biseauté s'étend sur la totalité de la zone de bordure périphérique.

7. Support de données selon la revendication 6, **caractérisé en ce que** la structure de surface (12) est une structure en relief, en particulier une structure de lentille, en particulier une structure de lentille cylindrique et/ou de lentille conique.

8. Support de données selon la revendication 6 ou 7, **caractérisé en ce que** le tronçon chanfreiné ou biseauté présente un angle de 1 jusqu'à 30°, en particulier de 10°, par rapport à la surface environnante du support de données (24).

9. Procédé de fabrication d'une structure de surface sous la forme d'une structure de lentille (12) sur un support de données, dans lequel la structure de surface, au cours d'une étape d'estampage, est estampée par un outil à estamper (10) et un contre-appui (26), l'outil à estamper (10) et/ou le contre-appui (26) étant chanfreiné(s) ou biseauté(s) sur toute une zone de bordure périphérique circulaire prédéterminée, **caractérisé en ce que** le chanfrein ou le biseau s'étend sur la totalité de la zone de bordure périphérique.
